# EUROPÄISCHE PATENTANMELDUNG

(11) **EP 3 032 156 A1**
(43) Veröffentlichungstag der Anmeldung: **15.06.2016**
(21) Anmeldenummer: 14197290.1
(22) Anmeldetag: 11.12.2014
(51) Int. Cl.: F16L 5/02, A62C 2/06, E04B 1/94, F16L 5/04, H02G 3/22

(54) **Dichtungsbaugruppe und Dichtungssegment**

(71) Anmelder: HILTI Aktiengesellschaft, 9494 Schaan (LI)
(72) Erfinder: Münzenberger, Herbert, 65191 Wiesbaden (DE)
(74) Vertreter: Hilti Aktiengesellschaft Corporate Intellectual Property

(57) **Zusammenfassung**

Eine Dichtungsbaugruppe (10) zum Abdichten einer Öffnung (12) in einer Wand (14) oder einer Decke eines Gebäudes, insbesondere zum Abdichten einer Leitungsdurchführung, wobei die Dichtungsbaugruppe (10) die Öffnung (12) abdecken kann und einen Durchlass (32) für eine Leitung (18) hat, weist zumindest zwei scheibenartige Dichtungssegmente (16) auf, die an innenseitigen Randabschnitten gemeinsam den Durchlass (32) definieren und sich in Umfangsrichtung an benachbarten Rändern (22) überlappen.

Ein Dichtungssegment (18) für eine solche Baugruppe weist eine elastische Dichtmasse (26) auf, die auf eine Trägerfolie (28) aufgebracht ist.

## Beschreibung

Die Erfindung betrifft eine Dichtungsbaugruppe zum Abdichten einer Öffnung in einer Wand oder einer Decke eines Gebäudes, insbesondere zum Abdichten einer Leitungsdurchführung, wobei die Dichtungsbaugruppe die Öffnung abdecken kann und einen Durchlass für eine Leitung aufweist. Die Erfindung betrifft des Weiteren ein Dichtungssegment für eine solche Baugruppe.

Aus dem Stand der Technik ist es bekannt, intumeszierende oder feuerbeständige dauerplastische Dichtmassen zu verwenden, um Öffnungen in Wänden oder Decken in Gebäuden zu verschließen. Die Knetmasse wird in die Öffnungen eingepresst oder eingespritzt und kann sich aufgrund der plastischen Eigenschaften an die Form der Öffnung anpassen und diese vollständig verschließen. Insbesondere bei Leitungsdurchführungen ist so eine gute Abdichtung der Öffnung möglich.

Um die Handhabung solcher Dichtmassen zu vereinfachen, ist es des Weiteren bekannt, die Dichtmasse auf eine elastische Trägerschicht aufzubringen. Somit liegen vorgefertigte Scheiben vor, mit welchen eine Öffnung abgedichtet werden kann. Die Scheiben sind beispielsweise ringförmig ausgebildet, wobei ein radial verlaufender Schlitz vorgesehen ist, sodass die Scheibe um eine bereits montierte Leitung oder ein Kabel herumgelegt werden kann. Im Zentrum ist häufig ein kreisförmiger Durchlass für die Leitung vorgesehen. Zur Montage wird die Scheibe um die Leitung herumgelegt und anschließend an die Wand oder die Decke angepresst, an der die Scheibe aufgrund der selbstklebenden Eigenschaften der Dichtmasse haften kann. Eine Anpassung an den Durchmesser der Leitung oder des Kabels ist möglich, indem die an den Schlitz angrenzenden Randbereiche übereinander gelegt werden.

Aufgrund der selbstklebenden Eigenschaften der Knetmasse kann es aber vorkommen, dass die Scheibe bereits beim Herumlegen um die Leitung an dieser oder an der Wand festklebt. Zudem ist nur eine begrenzte Anpassung an unterschiedliche Leitungsdurchmesser möglich. Werden die Ränder der Scheibe übereinander gelegt, wird die Scheibe trichterförmig verformt. Ein Andrücken an die Wand bzw. die Decke ist also nur begrenzt möglich, insbesondere, wenn die Scheibe um eine Leitung mit sehr kleinem Durchmesser herum gelegt wird. Eine Anpassung kann zwar durch eine Verkleinerung des Durchlasses erfolgen. In diesem Fall ist aber eine Verwendung bei größeren Leitungsdurchmessern nicht möglich.

Aufgabe der Erfindung ist es, eine Dichtungsbaugruppe sowie ein Dichtungssegment für eine solche Baugruppe bereitzustellen, die eine einfachere Montage der Dichtungsbaugruppe sowie eine flexiblere Verwendung bei Leitungsdurchbrüchen mit verschiedenen Leitungsdurchmessern ermöglichen.

Zur Lösung der Aufgabe ist eine Dichtungsbaugruppe zum Abdichten einer Öffnung in einer Wand oder einer Decke eines Gebäudes vorgesehen, insbesondere zum Abdichten einer Leitungsdurchführung, wobei die Dichtungsbaugruppe die Öffnung abdecken kann und einen Durchlass für die Leitung aufweist. Die Dichtungsbaugruppe weist zumindest zwei scheibenartige Dichtungssegmente auf, die an innenseitigen Randabschnitten gemeinsam den Durchlass definieren und sich in Umfangsrichtung an benachbarten Rändern überlappen.

Die erfindungsgemäße Dichtungsbaugruppe besteht erfindungsgemäß aus mehreren Dichtsegmenten, die zusammengesetzt werden. Die Anzahl der Dichtsegmente kann variiert werden, wobei grundsätzlich zwei Dichtsegmente ausreichend sind, um eine Abdichtung der Öffnung zu erzielen. Die Dichtsegmente werden jeweils, insbesondere von verschiedenen Richtungen, um die Leitung herumgelegt sowie an die Wand angelegt und dichten gemeinsam die Öffnung im Gebäude ab. Das Zusammensetzen aus mehreren Teilen aus verschiedenen Richtungen hat den Vorteil, dass keine Verformung der einzelnen Dichtungssegmente erforderlich ist, um die Dichtungsbaugruppe zu montieren. Ein Verkleben an den Dichtungssegmenten selbst bzw. an der Wand, bevor die einzelnen Dichtungssegmente ihre endgültige Montageposition erreicht haben, kann so weitgehend ausgeschlossen werden. Ein weiterer Vorteil besteht darin, dass die Größe des Durchlasses für die Leitung einfacher variiert werden kann, indem die Dichtungssegmente näher aneinander oder weiter entfernt voneinander positioniert werden, ähnlich einer Blende eines Fotoapparates. Anders als bei den bekannten einteiligen Dichtungsbaugruppen müssen die Dichtsegmente nicht verformt werden, sondern verbleiben weiterhin in flacher, scheibenförmig Form, sodass ein möglichst flächiges Verkleben mit der Wand oder der Decke möglich ist.

Um einen ausreichenden Überlappungsbereich und somit ein möglichst gutes Verschließen der Öffnung zu ermöglichen, sind die Dichtungssegmente vorzugsweise kreissegmentartig ausgebildet, insbesondere wobei die Dichtungssegmente einen Kreiswinkel von 200° bis 280° beschreiben. Die Dichtungssegmente weisen dadurch einen im Wesentlichen V-förmigen Ausschnitt auf, wobei vorzugsweise im Übergang der beiden V-förmigen Ränder der Durchlass teilweise definiert ist. Bei Verwendung von zwei oder mehr Dichtungssegmenten, die mit den V-förmigen Ausschnitten gegeneinander gerichtet sind, ist zwischen den Dichtungssegmenten eine rautenförmige oder vieleckige Aussparung gebildet, die den Durchlass bildet. Durch Zusammenschieben der Dichtungssegmente können die Größe und die Form dieses Durchlasses variiert werden, sodass eine Anpassung an eine Vielzahl von verschiedenen Leitungsquerschnitten möglich ist.

Um die Anpassungsmöglichkeiten der Dichtungsbaugruppe an eine Öffnung bzw. an die Leitung, die durch diese Öffnung geführt wird, weiter zu verbessern, weisen die Dichtungssegmente vorzugsweise eine Aussparung auf, die den Durchlass abschnittsweise definiert. Diese Aussparung ist vorzugsweise im Übergangsbereich der V-förmig zueinander verlaufenden Ränder vorgesehen, die den Kreisausschnitt definieren. Insbesondere ist diese Aussparung kreissegmentartig, sodass eine Anpassung an eine runde Leitung möglich ist, und/oder die Aussparung ist im Mittelpunkt des kreissegmentartigen Dichtungselements angeordnet.

Die Dichtungssegmente bestehen beispielsweise aus einer elastischen und/oder plastisch verformbaren Dichtmasse, die auf eine Trägerfolie aufgebracht ist. Eine plastisch verformbare Dichtmasse ermöglicht eine gute Anpassung an die Oberfläche der Wand bzw. der Decke sowie an die Öffnung, wodurch eine sehr gute Abdichtung der Öffnung erzielt werden kann. Durch die Trägerfolie ist die Verarbeitung der Dichtungssegmente deutlich vereinfacht, da diese die Dichtmasse stabilisiert und in einer scheibenförmigen Form hält. Zudem stellt die Trägerfolie in montiertem Zustand der Dichtungsbaugruppe einen Schutz für die Dichtmasse bereit, sodass diese vor mechanischen Beanspruchungen geschützt ist.

Die der Trägerfolie gegenüberliegende Rückseite der Dichtungssegmente ist vorzugsweise selbsthaftend ausgebildet, sodass die Dichtungssegmente mit dieser Rückseite an der Oberfläche der Wand bzw. der Decke oder an anderen Dichtungssegmenten haften können. Dadurch ist eine einfache Montage der Dichtungssegmente und somit der Dichtungsbaugruppe möglich. Eine weitere Anpassung an die Wand oder die Decke ist durch die plastischen Eigenschaften der Dichtmasse erreichbar.

Um den Transport bzw. die Handhabung der Dichtungssegmente zu vereinfachen, ist an der Rückseite vorzugsweise eine Transportschutzfolie angebracht, die unmittelbar vor der Montage der Dichtungssegmente abgezogen werden kann. Ein versehentliches Anhaften an der Leitung bzw. der Dichtungssegmente aneinander, beispielsweise während des Transports, kann dadurch zuverlässig ausgeschlossen werden.

Um die Brandschutzeigenschaften zu verbessern, kann die Dichtmasse beispielsweise Brandschutzadditive enthalten. Die Dichtmasse kann beispielsweise flammhemmend ausgebildet oder intumeszierend sein, sodass diese bei Hitzeeinwirkung aufschäumt und dadurch im Brandfall entstehende Fehlstellen in der Öffnung, beispielsweise durch eine schmelzende Leitung, verschließen kann.

Die Dichtungssegmente sind vorzugsweise aus einem flächigen Material ausgestanzt. Bei diesem Ausstanzen zieht sich die Trägerfolie teilweise über die Stanzkanten, sodass diese zusätzlich vor mechanischer Beanspruchung geschützt sind.

Zur Lösung der Aufgabe ist des Weiteren ein Dichtungssegment für eine solche Baugruppe vorgesehen, wobei das Dichtungssegment eine elastische Dichtmasse aufweist, die auf einer Trägerfolie aufgebracht ist.

Das Dichtungssegment weist vorzugsweise eine Dicke von maximal 7 mm auf, wodurch eine ausreichende Materialdicke vorhanden ist, um auch Unebenheiten in der Oberfläche der Wand oder der Decke auszugleichen und somit die Abdichtung der Öffnung sicherzustellen.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht einer erfindungsgemäßen Dichtungsbaugruppe,
- Figur 2 einen ersten Montageschritt der Dichtungsbaugruppe aus Figur 1,
- Figur 3 einen zweiten Montageschritt der Dichtungsbaugruppe aus Figur 1, und
- Figur 4 die Dichtungsbaugruppe aus Figur 1 in montiertem Zustand.

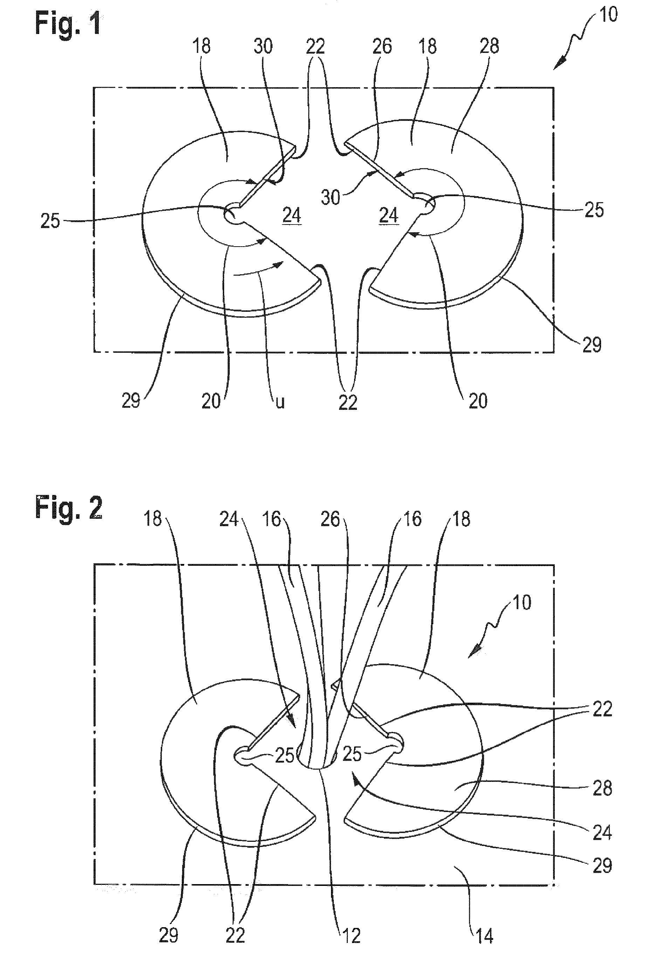

In Figur 1 ist eine Dichtungsbaugruppe 10 für eine Öffnung 12 (siehe auch Figuren 2 bis 4) in einer Wand 14 oder einer Decke eines Gebäudes, insbesondere einer Leitungsdurchführung für eine Leitung 16 gezeigt. Die Dichtungsbaugruppe 10 weist zwei Dichtungssegmente 18 auf, die in der hier gezeigten Ausführungsform identisch ausgebildet sind. Es ist aber auch denkbar, dass verschiedene Dichtungssegmente verwendet werden und/oder dass die Dichtungsbaugruppe 10 mehr als zwei Dichtungssegmente 18 aufweist.

Die Dichtungssegmente 18 sind jeweils eben und kreissegmentartig ausgebildet und beschreiben einen Kreiswinkel 20 von ca. 280°.

Jedes Dichtungssegment 18 weist zwei freie Ränder 22 auf, die im Wesentlichen radial verlaufen und zwischen sich einen im Wesentlichen V-förmigen Ausschnitt 24 definieren.

Der Kreiswinkel 20 der Dichtungssegmente ist in jedem Fall größer als 180°, vorzugsweise größer als 200°, sodass die freien Ränder 22 V-förmig zueinander verlaufen.

Im Mittelpunkt der Dichtungssegmente 18 ist jeweils eine kreissegmentartige Aussparung 25 vorgesehen, die, wie im Folgenden dargestellt wird, abschnittsweise einen Durchlass 32 für die Leitung 16 bildet.

Jedes Dichtungssegment besteht aus einer elastischen und/oder plastisch verformbaren Dichtmasse 26, die auf eine Trägerfolie 28 aufgebracht ist.

Die Dichtmasse 26, beispielsweise eine dauerplastische Butylkautschukmischung, wird zur Herstellung des Basismaterials für solche Dichtungssegmente 18 auf eine Fläche extrudiert, beispielsweise auf eine Transportschutzfolie, auf der die Dichtmasse 26 nicht oder nur geringfügig anhaftet. Anschließend wird eine Trägerfolie 28 auf die Dichtmasse 26 aufgebracht, die mit der Dichtmasse 26 verklebt, also eine stoffschlüssige Verbindung eingeht. Schließlich werden die Dichtungssegmente 18 aus diesem plattenförmigen Material ausgestanzt.

Das Ausstanzen hat den Vorteil, dass die Trägerfolie 28 an die Oberfläche der Dichtmasse 26 angepresst wird und zudem die Trägerfolie 28 teilweise um die Stanzkanten, hier die Ränder 22 sowie der äußere, kreisförmige Rand 29, herumgezogen wird, sodass diese zuverlässig geschützt sind.

Die Dichtmasse 26 selbst ist üblicherweise selbsthaftend ausgebildet, wobei die rückseitig aufgebrachte Transportschutzfolie verhindert, dass die Dichtungssegmente 18 aneinander selbst oder an anderen Gegenständen anhaften.

Die Dichtmasse 26 ist beispielsweise feuerhemmend ausgebildet und kann zusätzlich Brandschutzadditive, beispielsweise intumesziendes Material, beinhalten.

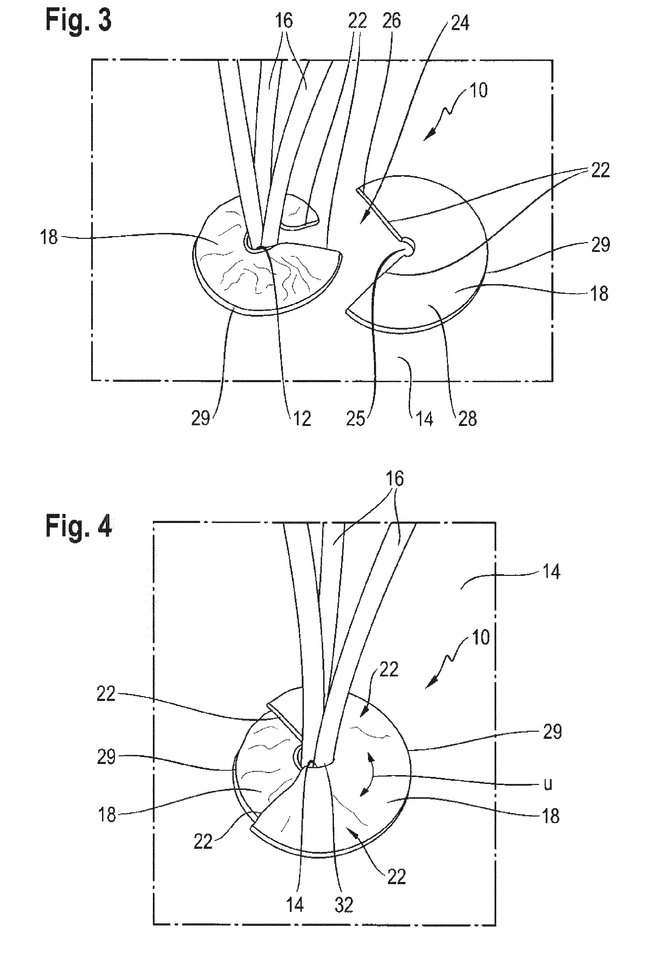

Zur Abdichtung einer Öffnung 12 werden mindestens zwei solcher Dichtungssegmente 18 verwendet (Figur 2). Zunächst wird die Transportschutzfolie eines Dichtungssegmentes 18 abgezogen, dieses mit der kreissegmentartigen Aussparung 25 um die Leitung 16 herumgelegt und mit der Rückseite 30 gegen die Oberfläche der Wand 14 gedrückt, sodass das Dichtungssegment 18 an der Wand 14 sowie gegebenenfalls an der Leitung 16 verklebt. Wie in Figur 3 zu sehen ist, ist durch die dauerplastischen Eigenschaften der Dichtmasse 26 sowie die Flexibilität der Trägerfolie 28 eine gute Anpassung an die Leitung 16, die Öffnung 12 bzw. die Wand 14 möglich.

Anschließend wird das zweite Dichtungssegment 18 ebenfalls in radialer Richtung, bezüglich der Leitungen 16 in entgegengesetzter Richtung gegen die Leitung 16 und die Wand 14 geführt. Das zweite Dichtungssegment 18 wird so um die Leitung 16 herumgelegt, dass sich die Ränder 22 der beiden Dichtungssegmente 18 in Umfangsrichtung U überlappen. Dadurch ist an den Rändern 22 eine sehr gute Abdichtung der Dichtungsbaugruppe 10 gewährleistet.

Die Größe des Durchlasses 32, der durch die Aussparungen 25 definiert ist, kann angepasst werden, indem die Dichtungssegmente 18 weiter aufeinander zu geschoben werden können oder ein größerer Abstand zwischen diesen gelassen wird. Zudem können die Ränder 22 um die Leitung 16 herum gelegt werden, so dass eine zuverlässige Abdichtung der Dichtungssegmente 18 und somit der Dichtungsbaugruppe 10 gegen die Leitung 16 erfolgt.

Da beide Dichtungssegmente 18 müssen zur Montage der Dichtungsbaugruppe 10 nicht oder nur geringfügig verformt werden, wodurch ein einfaches Montieren der Dichtungsbaugruppe 10 gewährleistet ist. Ein unerwünschtes Verkleben der Dichtungssegmente 18 an der Leitung 16, der Wand 14 oder der Dichtungssegmente 18 aneinander, bevor diese ihre endgültige Montageposition erreicht haben, ist zuverlässig ausgeschlossen.

Die erfindungsgemäße Dichtungsbaugruppe 10 ermöglicht somit eine einfachere Montage sowie eine sehr flexible Anpassung an verschieden große Öffnungen 12 bzw. an verschiedene Durchmesser der Leitung 16.

Statt der hier gezeigten Ausführungsform mit zwei Dichtungssegmenten 18 sind auch Ausführungsformen mit mehreren Dichtungssegmenten 18 möglich. Diese müssen lediglich so ausgebildet sein, dass sich benachbarte Dichtungssegmente mit ihren freien Rändern 22 in Umfangsrichtung überlappen, sodass die Öffnung 12 vollständig verschlossen werden kann.

## Patentansprüche

1. Dichtungsbaugruppe (10) zum Abdichten einer Öffnung (12) in einer Wand (14) oder einer Decke eines Gebäudes, insbesondere zum Abdichten einer Leitungsdurchführung, wobei die Dichtungsbaugruppe (10) die Öffnung (12) abdecken kann und einen Durchlass (32) für eine Leitung (16) aufweist, **dadurch gekennzeichnet, dass** die Dichtungsbaugruppe (10) zumindest zwei scheibenartige Dichtungssegmente (18) aufweist, die an innenseitigen Randabschnitten gemeinsam den Durchlass (32) definieren und sich in Umfangsrichtung (U) an benachbarten Rändern (22) überlappen.

2. Dichtungsbaugruppe nach Anspruch 1, **dadurch gekennzeichnet, dass** die Dichtungssemente (18) kreissegmentartig ausgebildet sind, insbesondere wobei die Dichtungssegmente (18) einen Kreiswinkel (20) von 200° bis 280° beschreiben.

3. Dichtungsbaugruppe nach Anspruch 1 oder 2, **dadurch gekennzeichnet, dass** die Dichtungssegmente (18) eine, insbesondere kreissegmentartige, Aussparung (25) aufweisen, die den Durchlass (32) abschnittsweise definiert.

4. Dichtungsbaugruppe nach einem der vorhergehenden Ansprüche, **dadurch gekennzeichnet, dass** die Dichtungssegmente (18) aus einer elastischen und/oder plastisch verformbaren Dichtmasse (26) bestehen, die auf eine Trägerfolie (28) aufgebracht ist.

5. Dichtungsbaugruppe nach Anspruch 4, **dadurch gekennzeichnet, dass** die der Trägerfolie (28) gegenüberliegende Rückseite (30) der Dichtungssegmente (18) selbsthaftend ausgebildet ist.

6. Dichtungsbaugruppe nach Anspruch 5, **dadurch gekennzeichnet, dass** an der Rückseite (30) eine Transportschutzfolie aufgebracht ist.

7. Dichtungsbaugruppe nach einem der Ansprüche 4 bis 6, **dadurch gekennzeichnet, dass** die Dichtmasse (26) Brandschutzadditive enthält.

8. Dichtungsbaugruppe nach einem der Ansprüche 4 bis 7, **dadurch gekennzeichnet, dass** die Dichtungssegmente (18) ausgestanzt sind.

9. Dichtungssegment (18) für eine Dichtungsbaugruppe (10) nach einem der vorhergehenden Ansprüche, **dadurch gekennzeichnet, dass** das Dichtungssegment (18) eine elastische Dichtmasse (26) aufweist, die auf eine Trägerfolie (28) aufgebracht ist.

10. Dichtungssegment nach Anspruch 9, **dadurch gekennzeichnet, dass** das Dichtungssegment (18) eine Dicke von maximal 7 mm aufweist.
